# EUROPÄISCHE PATENTANMELDUNG

(11) **EP 1 916 086 A1**
(43) Veröffentlichungstag der Anmeldung: **30.04.2008**
(21) Anmeldenummer: 07020011.8
(22) Anmeldetag: 12.10.2007
(51) Int. Cl.: B29C 45/57, B29D 11/00

(54) **Hochdruck-Spritzgiessverfahren zur Herstellung von optischen Bauteilen**

(30) Priorität: 25.10.2006 DE 102006050382
(71) Anmelder: Bayer MaterialScience AG, 51368 Leverkusen (DE)
(72) Erfinder: Salewski, Klaus, 47807 Krefeld (DE); Schiemann, Frank, 51519 Oldenthal (DE)

(57) **Zusammenfassung**

Die Erfindung betrifft ein Spritzgießverfahren zur Herstellung von dickwandigen Präzisionsbauteilen aus transparenten thermoplastischen Polymeren unter Verwendung eines Formwerkzeuges mit mindestens zwei Formteilhälften, dadurch gekennzeichnet, dass das geschmolzene Polymer in die Kavität des Formwerkzeuges eingespritzt wird und dann nach dem Befüllen der Kavität des Formwerkzeuges mit einem hydraulischen Nachdruck von mindestens 1000 Bar (100 MPa) beaufschlagt wird und die Wirkung eines derart hohen Druckes während des Abkühlens der Schmelze aufrechterhalten wird.

## Beschreibung

Die Erfindung betrifft ein Spritzgießverfahren zur Herstellung von dickwandigen Präzisionsbauteilen aus transparenten thermoplastischen Polymeren unter Verwendung eines Formwerkzeuges mit mindestens zwei Formteilhälften, dadurch gekennzeichnet, dass das geschmolzene Polymer in die Kavität des Formwerkzeuges eingespritzt wird und dann nach dem Befüllen der Kavität des Formwerkzeuges mit einem hydraulischen Nachdruck von mindestens 1000 Bar (100 MPa) beaufschlagt wird und die Wirkung eines derart hohen Druckes während des Abkühlens der Schmelze aufrechterhalten wird.

Dickwandige Präzisionsbauteile, insbesondere optische Präzisionsbauteileaus thermoplastischen Kunststoffen weisen aus spritzgießtechnischer Sicht in vielen Fällen ungünstige Geometrien auf. Problematisch ist insbesondere die Herstellung von optisch transparenten Formteilen mit großer Wanddicke ("dickwandig" d.h. in der Regel dicker als 4 mm) und die damit verbundene lange Abkühlzeit des Formteils. Weiterhin besitzen das Materialverhalten des Kunststoffs und die Prozessführung einen großen Einfluss auf die Schwindung der Formteile und die damit verbundenen optischen Eigenschaften. Die während der langen Abkühlzeit stattfindende thermische Volumenkontraktion des thermoplastischen Spritzlinges kann bei traditionellen Spritzgießverfahren durch das Nachdrücken der Schmelze bei vorzeitig einfrierenden Angußsystemen nicht vollständig kompensiert werden. Die so durch die nicht vollständig kompensierte Schwindung verursachten Geometriefehler führen zu fehlerhaften Abbildeleistungen der optischen Formteile, z. B. von Kunststofflinsen, so u.a. zu spärischer Aberration. Eine Darstellung des Spritzgiessens optischer Teile findet sich in Plastverarbeiter Juni 2007, S. 32ff.

Beim Spritzgießen hochwertiger optischer Bauteile, beispielsweise von optischen Linsen haben deshalb traditionelle Spritzgießverfahren keine große Bedeutung erlangt. Für diese Anwendungen haben in jüngster Zeit komplexe Spritzprägeverfahren eine dominierende Stellung errungen.

Hierbei handelt es sich um Systeme bei denen die Ausprägung der Zielkontur erst nach einem hochpräzisen Einspritzen durch einen beweglichen Prägestempel erreicht wird.

Anstelle der konventionellen Nachdruck-Schwindungskompensation kompensiert beim Spritzprägen der hochpräzise bewegte Prägestempel die thermische Volumenkontraktion annähernd vollständig. Kennzeichnend für das Spritzprägeverfahren ist ein sehr hoher apparativer Aufwand durch die Verwendung von hochpräzise positionierbaren Spritz-, Schließ- und Prägeeinheiten von überwiegend elektrischen Spritzgießmaschinen und einer sehr komplexen Spritzgießwerkzeugtechnik, siehe US 2003-0146526 A1 "Compression Molding of Optical Lenses, EP 0968807 A1 "Injection Compression Molding Method and Injection Compression Molding Machine", DE 10226301 B4 "Vorrichtung und Verfahren zum Spritzprägen von Kunststoffartikeln sowie nach dem Verfahren hergestellten Bauteil".

Nachteilig für Spritzprägeverfahren zur Herstellung optischer Bauelemente ist der sehr hohe apparative und verfahrenstechnische Aufwand. Nachteilig ist ausserdem der ungünstige Wirkungsgrad der wegen der hohen notwendigen Positioniergenauigkeit häufig eingesetzen elektrisch angetriebenen Spritzprägemaschinen bei den notwendigen langen Nachdruck- und Prägezeiten.

Die Patentanmeldung DE 101 14 228 A1 offenbart ein Spritzgußverfahren mit einem geregelten Schwindungsverhalten zur Reduzierung der Fertigungs-Maßtoleranzen. Hierbei geht man davon aus, dass nach Beendigung der Nachdruckwirkung durch Versiegeln des Angußsystems der weitere Zustandsverlauf isochor bis zur Raumtemperatur stattfindet und der abkühlende Spritzling die 1 bar Linie oberhalb der Raumtemperatur erreicht. Die Formteilschwindung ist dann durch die Differenz des spezifischen Volumens des Spritzlings nach isochorer Abkühlung zum Zeitpunkt des Erreichens der 1 bar Linie und dem spezifischen Volumen nach der weiteren isobaren Abkühlung zum Zeitpunkt des Erreichens der Raumtemperatur definiert.Damit ist die Schwindung eine dem Spritzgießprozeß immanente Eigenschaft, vergleiche Fig. 2, Bezugszeichen 21 = konventioneller Spritzgießprozess. Es wird daher in DE 101 14 228 A1 vorgeschlagen, diese durch die thermische Volumenkontraktion während des Abkühlprozesses unabwendbare Schwindung durch eine Regelung der Werkzeugtemperatur auf eine reproduzierbare Maßabweichung zu beschränken.

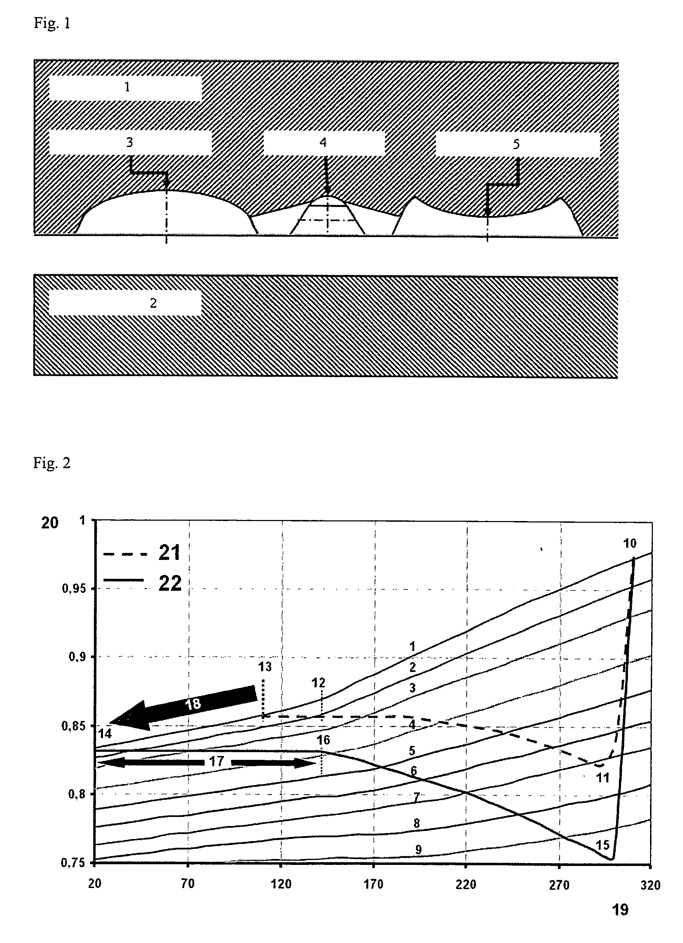

Der Erfindung liegt daher die Aufgabe zugrunde, ein vereinfachtes Verfahren zur Vermeidung der material- und prozessabhängigen Formteilschwindung beim Spritzgießen optischer Bauteile zu schaffen. Unter Verwendung eines Spritzgießwerkzeuges mit mindestens zwei Formhälften wird die thermische Volumenkontraktion des abkühlenden thermoplastischen Spritzlinges durch ein Hochdruck-Spritzgießverfahren annähernd vollständig kompensiert und insbesondere die 1 bar Linie erst bei Raumtemperatur erreicht, siehe Fig 2, Bezugszeichen 22 = Hochdruck Trennebenen Spritzgießprozeß.

Gegenstand der Erfindung ist ein Spritzgießverfahren zur Herstellung von dickwandigen Präzisionsbauteilen, insbesondere von optischen Bauteilen, wie beispielsweise Linsen, Spiegeln, Gittern oder Prismen, aus transparenten thermoplastischen Polymeren, dadurch gekennzeichnet, dass das geschmolzene Polymer in die Kavität des Formwerkzeuges eingespritzt wird und dann nach dem Befüllen der Kavität des Formwerkzeuges mit einem hydraulischen Nachdruck von mindestens 1000 Bar (100 MPa) beaufschlagt wird und die Wirkung eines derart hohen Druckes während des Abkühlens der Schmelze aufrechterhalten wird..

Kennzeichnend für dieses Verfahren sind eine geringe Anforderung an die Positioniergenauigkeit der Spritz- und Schließeinheit. Qualitätsentscheidende Anforderung an die Spritzgießmaschine ist in erster Linie die Höhe und eine ausreichende Genauigkeit und Reproduzierbarkeit des eingestellten Nachdruckes. Diesen Anforderungen entsprechen konventionelle hydraulische Spritzgießmaschinen.

In einem bevorzugten Verfahren wird der hydraulische Nachdruck so eingestellt, dass der Formwerkzeuginnnendruck gemessen im Bereich der größten Wanddicke des Formteiles zum Zeitpunkt des Erreichens der Erstarrungstemperatur des thermoplastischen Polymeren, Fig 2, Bezugszeichen 16. so bemessen ist das bei weiterer isochorer Abkühlung, Fig.2, Bezugszeichen 17, der Spritzling beim Erreichen der Raumtemperatur . Fig.2, Bezugszeichen 14, einen Werkzeuginnendruck von 1 Bar (0,1 MPa) aufweisen würde, wenn der Spritzling nicht vor dem Erreichen der Raumtemperatur entformt wird. Unter Erstarrungstemperatur wird hier z.B. die Glasübergangstemperatur des Polymeren oder die No Flow Temperatur verstanden. Das Erreichen des 1 Bar Druckwerte des Spritzlings bei Raumtemperatur kann auch als extrapolierte p-v-T-Funktion ausserhalb des Spritzgußwerkzeuges nach dem Entfomen des Formteiles stattfinden, wenn die Entformung des Spritzlings bei erhöhter Temperatur unter einem Restdruck erfolgt, der dem p-v-T-Funktionsverlauf entspricht.

Dieser Prozeßverlauf kann sowohl wie beschrieben durch die Kenntnis des p-v-T Verhaltens des Thermoplasten erzeugt werden, als auch alternativ durch experimentelles schrittweises Anheben des Nachdruckniveaus. Die notwendige Nachdruckzeit wird hierbei vorher durch eine konventionelle Siegelzeitbestimmung vorgenommen oder alternativ aus dem Prozeßverlauf mit Hilfe einer Siegelindex-Bestimmung, vergleiche Kunststofftaschenbuch, 27. Ausgabe, Saechtling, Carl Hanser Verlag München Wien, Seite 85, "Verfahren zur Bestimmung des Siegelindex (nach Salewski)".

Als transparentes thermoplastisches Polymer wird insbesondere Polycarbonat, Polymethacrylmethylimid, Cycloolefin-Copolymer oder Polyacrylat, insbesondere Polymethylmethacrylat, besonders bevorzugt Polycarbonat verwendet.

Die für eine präzise Herstellung von optischen Bauteilen notwendigen Spritzdrücke werden durch den Werkzeuginnendruckverlauf im p-v-T-Diagramm charakterisiert, und zwar durch einen isochoren Zustandsverlauf des abkühlenden Spritzlings beginnend mit der Erreichung der Angußversiegelung bis zur Erreichung der 1 bar-Linie bei Raumtemperatur.

Bis zum Erreichen der Angußversiegelung = Bezugszeichen 16, Fig.2, ist wegen der mit dem Einspritzen = Bezugszeichen 10 Fig.2, beginnenden Erstarrung der Angußkanäle ein sehr viel höherer Hydraulikdruck erforderlich = Bezugszeichen 15, Fig.2, als der zum Siegelpunkt in der Werkzeugkavität anstehende Restdrücke = Bezugszeichen 16, Fig.2. Beispielsweise muß für die beschriebene isochore Prozeßführung für ein Polycarbonat nach einer Abkühlung der Schmelze auf eine Siegeltemperatur von 150°C der anstehende Restdruck in der Werkzeugkavität von 800 Bar je nach Dicke und Länge des Angußsystemes durch die Maschinenhydraulik ein ein Kompressionsdruck nach dem Einspritzen der Schmelze von mindestens 1600 Bar aufgebracht werden, in der Regel jedoch Kompressionsdrücke oberhalb von 2500 Bar, Fig.2, Bezugszeichen 15. Die thermische Volumenkontraktion des Angußsystems wird durch die hohen Kompressionsdrücke überkompensiert oder überladen. Hierdurch verklemmen sich die Angüsse der Spritzlinge in den konventionellen, als geschlossener Kanal ausgeführte Angußbuchsen und/oder Angußkanäle von Spritzgießwerkzeugen, die von der Maschinendüse befüllt werden. Damit diese überladenen Angußsysteme überhaupt entformt werden können wird in einer bevorzugten Ausführung die Angußlage beim Hochdruck-Präzisionsspritzgießen nicht senkrecht zur Werkzeugtrennebene ausgeführt, sondern in die Trennebene zwischen die beiden Formhälften gelegt. Die Angüsse sind vorzugsweise zylindrisch ausgeführte und werden hierduch mittig in zwei gleiche Hälften getrennt und weisen hierdurch eine optimale Entformungsschräge auf. Auch einseitig offene, beispielsweise halbzylindrisch ausgeführte Angußkanäle in nur einer Formhälfte sind möglich.

Das Verfahren wird bevorzugt in solchen Fällen angewendet, in denen die größte Wanddicke des Formteiles mindestens 5 mm, bevorzugt mindestens 6 mm beträgt.

Weiterer Gegenstand der Erfindung ist ein optisches Kunststoffformteil, insbesondere eine Linse, ein Spiegel, ein Gitter oder ein Prisma erhältlich aus dem erfindungsgemäßen Verfahren.

Die erforderlichen Nachdrücke zur vollständigen Kompensation der Verarbeitungsschwindung liegen beispielsweise für den Polycarbonattyp mit einem nach ISO 1133 bei 300°C / 1,2kg gemessenen MVR 60g/10min (z.B. Polycarbonat Typ Makrolon 1265^{®} der Bayer MaterialScience AG, Deutschland) bei 2700 Bar, für den höherviskosen und höhermolekularen Polycarbonattyp mit einem MVR 19 g/10min bei 300°C / 1,2kg (z.B. Polycarbonat Typ Makrolon 2405^{®} der Bayer MaterialScience AG, Deutschland) bei 5000 Bar und und mit einem MVR 12 g/10min bei 300°C / 1,2 kg (z.B. Polycarbonat Typ Makrolon 2605^{®} der Bayer MaterialScience AG, Deutschland) bei 7500 Bar, die jedoch mit handelsüblichen Spritzgießmaschinen nur mit einem entsprechenden maschinellen Zusatzaufwand realisierbar sind.

Die Erfindung wird nachstehend beispielhaft unter Verwendung der Figuren näher erläutert. Es zeigen:
Fig. 1 Ein Spritzgusswerkzeug im Querschnitt mit Anguß und Linsen in der Trennebene. Hierbei bedeutet Bezugszeichen 1 bewegliche Werkeughälfte, Bezugszeichen 2 feste Werkzeughälfte, Bezugszeichen 3 plankonvexe Positivlinse, Bezugszeichen 4 Angußsystem in Trennebene, und Bezugszeichen 5 plankonkave Negativlinse
Fig. 2 Darstellung des p-v-T Zustandverlaufs, konventionell versus Hochdruck-Verfahren
   Hierbei ist auf der vertikalen Achse mit dem Bezugszeichen 20 das Spezifische Volumen in cm³/g und auf der horizontalen Achse mit dem Bezugszeichen 19 die Massetemperatur in Grad Celsius aufgetragen. Von oben nach unten stellen die Linien die Isobaren bei 1bar = Bezugszeichen 1, 200bar = Bezugszeichen 2, 40bar = Bezugszeichen 3, 800bar = Bezugszeichen 4, 1200bar = Bezugszeichen 5, 1600bar = Bezugszeichen 6, 2000bar = Bezugszeichen 7, 2400bar = Bezugszeichen 8 und 2800bar = Bezugszeichen 9 für ein PC mit einem MVR 60g/10min gemessen bei 300°C/1,2kg, beispielsweise einem Makrolon 1265^{®} dar.
   Die unterbrochene Linie = Bezugszeichen 21 stellt den Zustandsverlauf des Werkzeuginnendrucks dar für das konventionelle Spritzgiessen mit anwendungsüblichen Drücken. Ersichtlich ist die Schwindung bis RT durch die Differenz des spezifischen Volumens zwischen Beginn = Bezugszeichen 13 und Ende = Bezugszeichen 14 der isobaren Abkühlung = Bezugszeichen 18 entlang der 1 bar Linie bis Raumtemperatur.
   Die durchgezogene Linie = Bezugszeichen 22 stellt den Zustandsverlauf dar für das Hochdruck-Verfahren. Im Gegensatz zum konventionellen Spritzgiessverfahren fallen Beginn und Ende der isobaren Abkühlung entlang der 1 bar Linie in einem Punkt bei Raumtemperatur zusammen = Bezugszeichen 14, wodurch sich die Schwindung Null ergibt. Voraussetzung hierfür ist eine vorherige isochore Abkühlung = Bezugszeichen 17 auf einem ausreichend hohen Druckniveau.

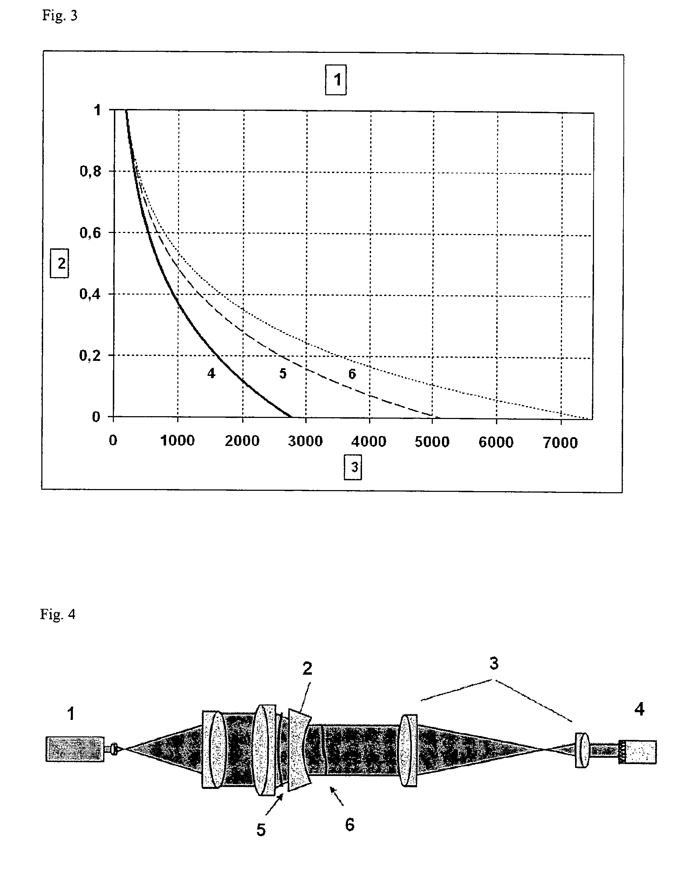

Fig. 3 Darstellung der Nachdruckermittlung für Schwindung = 0
   Auf der vertikalen Achse mit dem Bezugszeichen 2 ist die Verarbeitungsschwindung in % dargestellt. Die horizontale Achse mit dem Bezugszeichen 3 zeigt die an der Spritzgießmaschine einzustellenden Nachdrücke an. Die Schwindung variiert als Funktion des Nachdruckes in einem dargestellten Bereich von 1 % bis 0%. Diese Schwindungsfunktion ist abhängig unter anderem von der Viskosität des verwendeten Kunststoffes.
   In diesem Beispiel ist ein Nachdruck von 2700bar zur Erzielung einer Null-Schwindung notwendig für ein niederviskoses Polycarbonat mit einem MVR 60g/10min gemessen bei 300°C/1,2kg, (z.B. Makrolon 1265^{®}, untere durchgezogene Linie mit dem Bezugszeichen 4). Das mittelviskose PC mit einem MVR 19 g/10min bei 300°C / 1,2kg (z.B. Polycarbonat Typ Makrolon 2405^{®}, mittlere gestrichelte Linie mit dem Bezugszeichen 5) benötigt für eine Nullschwindung mit 5000 bar einen deutlich höheren Nachdruck. Das höherviskose PC mit einem MVR 12 g/10min bei 300°C / 1,2 kg (z.B. Polycarbonat Typ Makrolon 2605^{®}, obere feingestrichelte Linie mit dem Bezugszeichen 6) benötigt dagegen sogar einen Nachdruck von 7500 bar.
Fig. 4 Darstellung des schematischen Versuchsaufbaus mit dem Shack Hartmann Sensor zur Prüfung der Wellenfrontaberration.
   Die Beleuchtung der zu prüfenden Linse (Bezugszeichen 2) erfolgt mit einem 635 nm-Laser (Bezugszeichen 1) mit einer eingangsseitig angepassten konvergenten Wellenfront (Bezugszeichen 5). Die Planwelle (Bezugszeichen 6) am Ausgang der zu prüfenden Linse trägt die Informationen über die totale Formabweichung der Linsenfläche, z.B. infolge der Verarbeitungsschwindung. Diese Wellenfront (Bezugszeichen 6) wird mit Hilfe eines Keplerteleskops (Bezugszeichen 3) auf einem Shack-Hartmann-Wellenfrontsensor (Bezugszeichen 4) abgebildet.

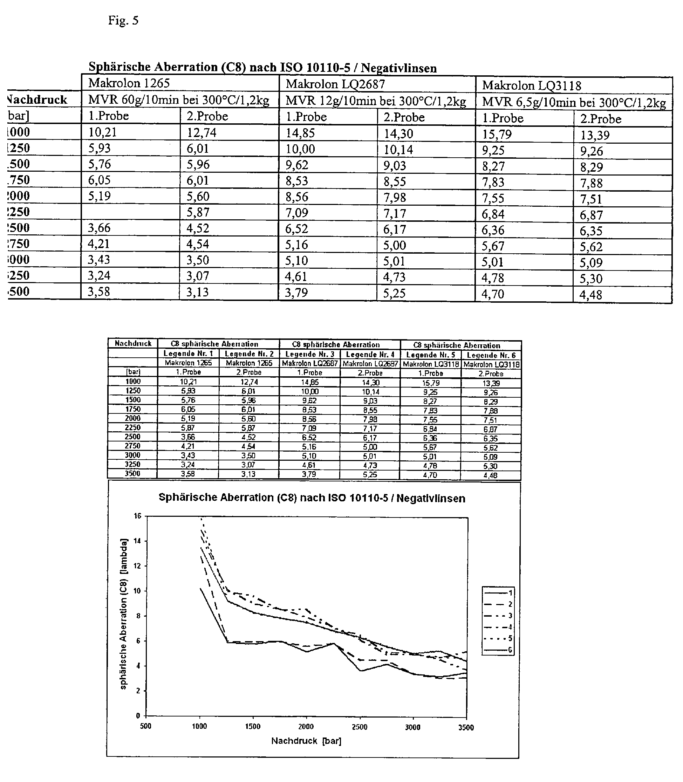

Fig. 5 Tabellarische Darstellung experimenteller Ergebnisse der mit steigendem Druck abnehmenden Wellenfront Aberration
   In der Tabelle ist die sphärische Aberration C8 nach ISO 10110-5 in einem Vielfachen der Wellenlänge lambda (635nm) für drei Polycarbonattypen mit jeweils 2 Messungen spaltenweise dargestellt. Die zeilenweise Darstellung zeigt den Einfluß des an der Spritzgießmaschine einzustellenden Nachdrucks an. Die sphärische Aberration C8 verringert sich mit zunehmenden Nachdruck in einem dargestellten Bereich von 16 lambda bis auf minimal 3 lambda. Diese nachdruckabhängige Funktion ist abhängig unter anderem von der Viskosität des verwendeten Kunststoffes. In diesem Beispiel hat das niederviskose Polycarbonat mit einem MVR 60g/10min gemessen bei 300°C/1,2kg, (z.B. Makrolon 1265^{®}) das kleinste Aberrationsniveau. Das höherviskose PC mit einem MVR 12 g/10min bei 300°C / 1,2 kg (z.B. Polycarbonat Typ Makrolon LQ2687^{®}) und das hochviskose PC nnummer 5+6) mit einem MVR 6,5 g/10min bei 300°C / 1,2 kg (z.B. Polycarbonat Typ Makrolon LQ3118^{®}) bewegen sich auf einem um ca. 2 lambda höheren ungünstgeren Aberrationsniveau.

### Beispiele

### Beispiel: Spritzgießen von konturgenauen plankonvex oder plankonkaven Linsen

Die Linsenkonturen werden ohne Schwindungskorrektur in eine Werkzeughälfte als Mehrfachkavität eingebracht. Eine dieser symmetrisch angeordneten Kavitäten ist mit einem Werkzeuginnendruckfühler ausgerüstet. Der Fühler ist an der Linsenposition mit der größten Wanddicke installiert. Die Anspritzung der Linsenkavitäten erfolgt über einen ebenfalls in dieser Werkzeughälfte befindlichen Kaltkanal mit großen Entformungsschrägen. Diese Formhälfte enthält ein Auswerfersystem zur Entformung des Spritzlings am Ende des Formteilbildungsprozesses. Die Spritzgießform ist in einer Spritzgießmaschine mit großem Hydraulikübersetzungsverhältnis zur Erreichung von Werkzeuginnendrücken bis zu 3000 bar eingebaut.

Transparentes Polycarbonat Granulat wird mit 300°C in einer Spritzgießmaschine plastifiziert und mit konventionell niedrigen Drücken in die auf 90°C temperierte Spritzgießform eingespritzt. Die Maschinenparameter Dosierweg, Umschaltpunkt, Nachdruckzeit, etc. werden mit dieser Einstellung so optimiert, dass ein möglichst konturgenauer Spritzling entsteht. Die Nachdruckzeit wird so bemessen, dass sie der Siegelzeit des Spritzlings entspricht. Ausgehend von dieser Maschineneinstellung wird der Spritzgießmaschinendruck während der Nachdruckphase schrittweise solange gesteigert bis der infolge Erstarrung abklingende Werkzeuginnendruck am Ende der Siegelzeit ( gleich eingestellte Nachdruckzeit ) einen Druck erreicht, der bei weiterem isochoren Zustandverlauf horizontal im p-v-T Diagramm die 1 bar Linie bei Raumtemperatur (RT) schneidet.

Für das in Fig. 2 gezeigte Beispiel für den Zustandsverlauf des Hochdruck-Verfahren = Bezugszeichen 22 wäre der anzustrebende Werkzeuginnendruck am Ende der Siegelzeit ein Restdruck von ca. 800 bar.

Alternativ zur Einstellung der Spritzgießmaschine über die p-vT Abhängigkeit kann bei unbekanntem p-v-T Verhalten der notwendige Nachdruck experimentell bestimmt werden. Hierzu wird gleichermaßen der Nachdruck beim Einrichten der Spritzgießmaschine schrittweise gesteigert und von jeder gespritzten Linse die Verarbeitungsschwindung, bzw. die Abweichung vom Werkzeugkonturmaß bestimmt. Aus dieser Funktion Schwindung in Abhängigkeit vom eingestellten Nachdruck kann der Nachdruck für das Schwindungsmaß 0 ermittelt werden, siehe Fig. 3.

Mit dem beschriebenen Verfahren wurde jeweils zwei Negativlinsen aus drei Polycarbonattypen mit unterschiedlichen Viskositäten spritzgegossen und die Aberration mit einem Laserlicht mit der Wellenlänge Lambda=635 nm nach der Shack-Hartmann Methode vermessen, siehe Figure 4.

Bei diesem Versuch wurde der hydraulische Nachdruck der Spritzgießmaschine schrittweise beginnend bei 1000 bar erhöht bis zu 3500 bar. Die nach dem Shack-Hartmann Verfahren gemessene Aberration wird für die drei Polycarbonattypen von einem Bereich von 5 bis 11 Lambda bei 1000 bar auf 2 bis 3 Lambda bei 3500 bar abgesenkt, siehe Fig. 5.

## Patentansprüche

1. Spritzgießverfahren zur Herstellung von dickwandigen Präzisionsbauteilen aus transparenten thermoplastischen Polymeren unter Verwendung eines Formwerkzeuges mit mindestens zwei Formteilhälften, **dadurch gekennzeichnet, dass** das geschmolzene Polymer in die Kavität des Formwerkzeuges eingespritzt wird und dann nach dem Befüllen der Kavität des Formwerkzeuges mit einem hydraulischen Nachdruck von mindestens 1000 Bar (100 MPa) beaufschlagt wird und die Wirkung eines derart hohen Druckes während des Abkühlens der Schmelze aufrechterhalten wird.

2. Verfahren nach Anspruch 1, **dadurch gekennzeichnet, dass** der Druck der Spritzgießmaschine im Bereich der Nachdruckphase so eingestellt wird, dass der Formwerkzeuginnnendruck gemessen im Bereich der größten Wanddicke des Formteiles zum Zeitpunkt des Erreichens der Erstarrungstemperatur des thermoplastischen Polymeren so bemessen ist, das bei weiterer isochorer Abkühlung der Spritzling beim Erreichen der Raumtemperatut 1 Bar (0,1 MPa) Werkzeuginnendruck aufweisen würde, wenn der Spritzling nicht vor dem Erreichen der Raumtemperatur entformt wird.

3. Verfahren nach Anspruch 1 oder 2, **dadurch gekennzeichnet, dass** als transparentes thermoplastisches Polymer Polycarbonat, Polymethacrylmethylimid, Cycloolefin-Copolymer oder Polyacrylat verwendet wird.

4. Verfahren nach einem der Ansprüche 1 bis 3, **dadurch gekennzeichnet, dass** ein Formwerkzeug mit mindestens zwei Formteilhälften verwendet wird, bei dem der Angusskanal in der Trennebene der Formteilhälften angeordnet ist.

5. Verfahren nach einem der Ansprüche 1 bis 4, **dadurch gekennzeichnet, dass** die größte Wanddicke des Formteiles mindestens 5 mm beträgt.

6. Optisches Formteil erhältlich aus einem Verfahren gemäß einem der Ansprüche 1 bis 5.
